# EUROPÄISCHE PATENTANMELDUNG

(11) **EP 1 300 636 A2**
(43) Veröffentlichungstag der Anmeldung: **09.04.2003**
(21) Anmeldenummer: 02022402.8
(22) Anmeldetag: 04.10.2002
(51) Int. Cl.: F24H 1/40

(54) **Wärmetauscher für ein Gasheizgerät, insbesondere ein Brennwertgerät**

(30) Priorität: 06.10.2001 DE 10149330
(71) Anmelder: ROBERT BOSCH GMBH, 70442 Stuttgart (DE)
(72) Erfinder: Kehl, Albin, Dr., 73098 Rechberghausen (DE); Schmuker, Franz, 73117 Wangen (DE); Schaefer, Albrecht, 70771 Leinfelden-Echterdingen (DE); Klosok, Jan, 61336 Waiblingen (DE)

(57) **Zusammenfassung**

Die Erfindung betrifft einen Wärmetauscher für ein Gasheizgerät, insbesondere ein Brennwertgerät, der Abgaskanäle und Flüssigkeitskanäle aufweist, bei dem die vom Gasheizgerät abgegebenen Abgase die Abgaskanäle durchströmen und dabei Wärme an die die Flüssigkeitskanäle durchfließende Flüssigkeit abgeben. Ein kostengünstig herstellbarer Wärmetauscher mit gutem Wärmeaustausch zwischen Abgas und zu erwärmender Flüssigkeit wird dadurch als kompakte Einheit geschaffen, dass er als Abschnitt eines Strangpressprofiles ausgebildet ist, das mindestens einen axial verlaufenden Flüssigkeitskanal aufweist, um den mehrere axial verlaufende Abgaskanäle angeordnet sind, dass die Flüssigkeitskanäle auf der Abgas-Eintrittsseite flüssigkeitsdicht verschlossen sind, dass in die Flüssigkeitskanäle zentrisch Flüssigkeitsrohre eingesetzt sind, die in den Flüssigkeitskanälen Flüssigkeits-Zulaufkanäle ableiten und im Abstand zu den geschlossenen Seiten der Flüssigkeitskanäle offen enden, und dass im Bereich der Abgas-Austrittsseite die Flüssigkeitszulaufkanäle den Anschluss für den Flüssigkeits-Rücklauf und die Enden der Flüssgkeitsrohre den Anschluss für den Flüssigkeits-Vorlauf bilden.

## Beschreibung

Die Erfindung betrifft einen Wärmetauscher für ein Gasheizgerät, insbesondere ein Brennwertgerät, der Abgaskanäle und Flüssigkeitskanäle aufweist, bei dem die vom Gasheizgerät abgegebenen Abgase die Abgaskanäle durchströmen und dabei Wärme an die die Flüssigkeitskanäle durchfließende Flüssigkeit abgeben.

### Stand der Technik

Wärmetauscher für Brennwertgeräte bestehen in der Regel aus Aluminium-Sandgussteilen, Rippenrohren aus Aluminium oder Edelstahl-Rohren und -Heizflächen. Auf dieser Basis hergestellte Wärmetauscher sind nicht nur sehr teuer in der Herstellung sondern auch in der Formgebung beschränkt.

Aufgabe der Erfindung ist es, bei einem Wärmetauscher der eingangs erwähnten Art den Wärmeaustausch zwischen den Abgasen und der zu erwärmenden Flüssigkeit, z.B. Heizungs- oder Brauchwasser, zu verbessern und dabei die Herstellung desselben zu vereinfachen, wobei die Kondensation des Wasserdampfes und die Korrosion der abgasseitigen Heizflächen mitberücksichtigt sind.

### Vorteile der Erfindung

Diese Aufgabe ist nach der Erfindung dadurch gelöst, dass er als Abschnitt eines Strangpressprofiles ausgebildet ist, das mindestens einen axial verlaufenden Flüssigkeitskanal und mindestens einen axial verlaufenden Abgaskanal aufweist.

Das Strangpressprofil ist mit hoher Maßgenauigkeit preisgünstig herstellbar, was zu einer Kostenreduzierung gegenüber einem bekannten Aluminium-Sandguss-Wärmetauscher führt. Dies gilt auch für die anderen bekannten Rohr- oder Platten-Wärmetauscher. Mit den um die Flüssigkeits-Kanäle gruppierten Abgaskanälen kann deren Wärme-Austauschfläche sehr groß gemacht werden, ohne den Platzbedarf für den Wärmetauscher unnötig vergrößern zu müssen. Dies ist von Bedeutung, da der Wärmeübergang vom Abgas zur Wandung des Wärmetauschers wesentlich schlechter ist als derjenige von der Wandung zu der im Wärmetauscher fließenden Flüssigkeit. Die abgasseitige Oberfläche des Wärmetauschers lässt sich bei diesem Abschnitt eines Strangpressprofiles einfach wesentlich vergrößern, was zu einer Verbesserung des Wirkungsgrades beiträgt.

Diese axial gerichteten Abgaskanäle können leicht von Korrosionsprodukten befreit werden, wozu nur eine einfache Reinigung der Abgaskanäle durchzuführen ist.

Das für den Wärmetauscher erforderliche Strangpressprofil ist in großen Mengen bei geringen Werkzeugkosten herstellbar. Dabei sind filigrane Strukturen der Kanäle durchaus gut realisierbar und frei wählbar.

Zu einer eindeutigen Entkopplung der Flüssigkeitskanäle von den Abgaskanälen ist weiterhin vorgesehen, dass die Flüssigkeitskanäle auf der Abgas-Eintrittsseite flüssigkeitsdicht verschlossen sind.

Die Verbindung zwischen dem Wärmetauscher und einem Brenner wird nach einer Ausgestaltung dadurch vereinfacht und gelöst, dass auf der Abgas-Eintrittsseite durch Bearbeitung des Abschnittes eine Brennkammer zur Aufnahme eines Brenners ausgebildet oder eine Brennkammer auf den Abschnitt des Strangpressprofiles aufgesetzt ist.

Der Querschnitt des Strangpressprofiles ist nach einer Ausgestaltung so ausgeführt, dass der Abschnitt eine oder mehrere runde Innenwände und eine Außenwand aufweist, dass die Innenwände Flüssigkeitskanäle umschließen und dass zwischen den Innenwänden und der Außenwand Stege eine Vielzahl von Abgaskanäle bilden. Die Wandungen dieser Abgaskanäle stehen mit den Abgasen im Wärmeaustauschkontakt; ihre Fläche kann sehr groß sein.

Eine besonders kompakte Form des Wärmetauschers ergibt sich nach einer Ausgestaltung dadurch, dass der Abschnitt runden Querschnitt aufweist, dass im Zentrum eine runde Innenwand einen Flüssigkeitskanal umschließen und dass radial zur runden Außenwand verlaufende Stege die Abgaskanäle bilden. Dabei kann vorzugsweise vorgesehen sein, dass die Stege über den Umfang des Abschnittes gleichmäßig verteilt sind und im Querschnitt gleich große Abgaskanäle bilden, um alle Teilströme der Abgase gleichmäßig in den Wärmeaustausch einzubeziehen.

Die Ausgestaltung des Strangpressprofils kann auch so erfolgen, dass der Abschnitt quadratischen Querschnitt aufweist, dass im Zentrum eine runde Innenwand einen Flüssigkeitskanal umschließt und dass radial zur rahmenartigen Außenwand verlaufende Stege die Abgaskanäle bilden, um gleich gute Ergebnisse zu erzielen, ohne die Herstellung zu erschweren.

Dieser Aufbau des Strangpressprofils lässt sich auch für Wärmetauscher hoher Leistung anwenden, wenn die Ausführung so erweitert wird, dass mehrere derartige Abschnitte zu einem einstückigen Gesamtabschnitt aneinander gereiht sind, wobei die aufeinander stoßenden Seiten zu einer gemeinsamen Trennwand zusammengefasst sind.

Ist weiterhin vorgesehen, dass der Abschnitt oder der Gesamtabschnitt auf der Abgas-Eintrittsseite mit der verlängerten Außenwand eine Kammer zur Aufnahme eines Brenners umschließt, dann wird auf einfache Weise für den Brenner eine angeformte Brennkammer am Wärmetauscher geschaffen.

Der Anschluss des Flüssigkeits-Rücklaufs und des Flüssigkeits-Vorlaufs wird auf einfache Weise dadurch gelöst, dass der Abschnitt oder der Gesamtabschnitt auf der Abgas-Austrittsseite mit den verlängerten Innenwänden der Flüssigkeitskanäle durch eine Abgassammelwanne geführt sind und Anschlüsse für den Flüssigkeits-Rücklauf bilden und dass die Flüssigkeitsrohre mit ihren Enden aus den Enden der Innenwände ragen und zum Anschluss des Flüssigkeits-Vorlaufes zusammengefasst sind.

Der Wärmetauscher arbeitet dadurch im Gegenstromprinzip zwischen den Abgasen und der zu erwärmenden Flüssigkeit, dass die Abgase in den Abgaskanälen von oben nach unten strömen und dass die Flüssigkeit des Vorlaufes in den ringförmigen Flüssigkeitszulaufkanälen von unten nach oben und im Flüssigrohr von oben nach unten gerichtet sind.

Der Wärmetauscher wird dadurch vervollständigt, dass der Abschnitt oder der Gesamtabschnitt aus einem Alumimnium-Strangpressprofil abgelängt ist und dass in die Abgas-Eintrittsseite durch Nachbearbeitung die Kammer für den Brenner eingearbeitet ist, während auf der Abgas-Austrittsseite die Innenwände der Flüssigkeitskanäle freigelegt sind, wobei das Aluminium als Material sich schon bei den bekannten Wärmetauschern bewährt hat. Die Abführung der aus den Abgaskanälen austretenden Abgase ist dadurch ermöglicht, dass die Abgas-Austrittsseite mit einer Abgassammlerwanne abgeschlossen ist, die von den Innenwänden der Flüssigkeitskanäle mit den eingesetzten Flüssigkeitsrohren druchquert ist. Dabei ist für einen störungfreien Betrieb erforderlich, dass die Flüssigkeitskanäle mit den Innenwänden zur Abgassammelkammer hin abgedichtet sind.

Die Kontaktflächen der Abgaskanäle zu den Abgasen können dadurch noch vergrößert werden, dass die die Innenwände der Flüssigkeitskanäle mit der Außenwand verbindenden Stege mit Rippen versehen sind.

Der Wirkungsgrad des Wärmetauschers kann dadurch verbessert werden, dass in mindestens einem der Abgaskanäle Strömungsschikanen zur Erzeugung von Turbulenzen angeordnet sind.

Die Anordnung der Kanäle im Strangpressprofil kann auch so gewählt werden, dass die Abgaskanäle im Zentrum des Abschnittes des Strangpressprofiles angeordnet sind und dass an die Außenwände der Abgaskanäle Flüssigkeitskanäle angeformt sind.

### Zeichnung

Die Erfindung wird anhand von in den Zeichnungen dargestellten Ausführungsbeispielen näher erläutert. Es zeigen:
- Fig. 1: den Querschnitt eines runden Strangpressprofiles mit einem zentrischen Flüssigkeitskanal mit eingesetztem Flüssigkeitsrohr, der von einer Vielzahl von Abgaskanälen umgeben ist,
- Fig. 2: im schematischen Längsschnitt den Aufbau eines Gasheizgerätes mit einem Wärmetauscher, der als Abschnitt von einem Strangpressprofil nach Fig. 1 abgelängt ist,
- Fig. 3: den schematischen Aufbau eines Gasheizgerätes mit einem Wärmetauscher aus zwei quadratischen Basisteilen, die je einen Flüssigkeitskanal mit eingesetztem Flüssigkeitsrohr aufweisen,
- Fig. 4: den Querschnitt des Wärmetauschers im Gasheizgerät nach Fig. 3,
- Fig. 5: im schematischen Längsschnitt einen Aufbau mit im Zentrum des Abschnittes angeordneten Abgaskanälen und
- Fig. 6: die stirnseitige Ansicht in die ausgebildete Brennkammer des Abschnittes nach Fig. 5.

### Ausführungsbeispiel

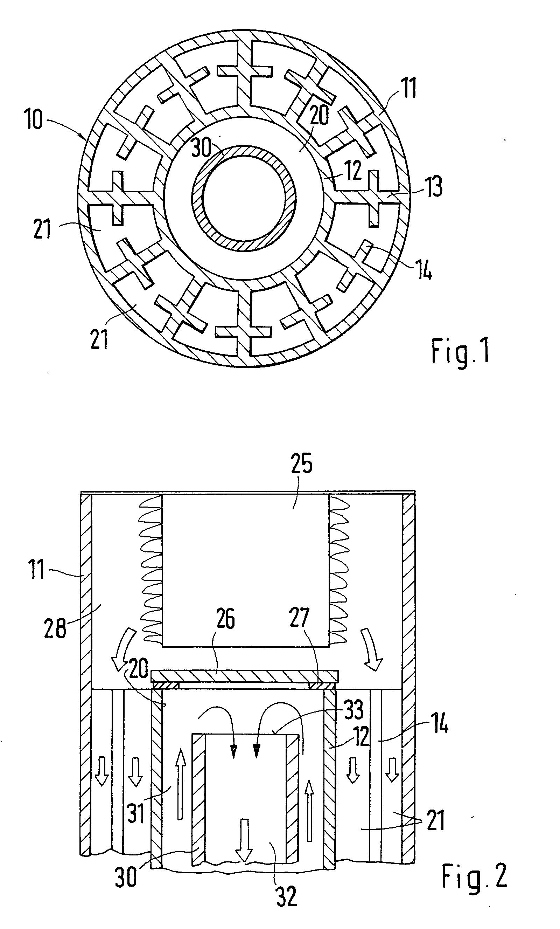

Der Querschnitt nach Fig. 1 kann im Aluminium-Strangpressverfahren mit einem einfachen Werkzeug kostengünstig in Mengen hergestellt werden, da er nur in Pressrichtung ausgerichtete Kanäle aufweist. Dabei bildet eine runde Außenwand 11 den geschlossenen äußeren Abschluss und im Zentrum begrenzt eine Innenwand 12 einen Flüssigkeitskanal 20, in den zentrisch ein Flüssigkeitsrohr 30 eingesetzt wird, das aus Kunststoff bestehen kann und einen Außendurchmesser aufweist, der kleiner ist als der Innendurchmesser der runden Innenwand 12.

Radial ausgerichtete Stege 13 verbinden die Außenwand 11 mit der Innenwand 12 und teilen Abgaskanäle 21 ab, die sich in großer Anzahl gleichmäßig über den Umfang des Abschnitts 10 verteilen, der in der gewünschten Abmessung von dem Aluminium-Strangpressprofil abgelängt wird. An den Stegen 13 können abstehende Rippen 14 zur Vergrößerung der Oberflächen in den Abgaskanälen 21 angeformt sein.

Wie das Schema nach Fig. 2 zeigt, kann die obere Stirnseite des abgelängten Abschnitts 10 so bearbeitet werden, dass nur noch die Außenwand 1 stehen bleibt und eine Brennkammer 28 umschließt, die den gasgespeisten Brenner 25 aufnimmt. Der anschließende unbearbeitete Teil des Abschnitts 10 ist im Bereich des Flüssigkeitskanals 20 mit einer Verschlussplatte 26 und einem Dichtungselement 27 flüssigkeitsdicht verschlossen. Das vom Brenner 25 ausgehende heiße Abgas tritt in die Abgaskanäle 21 ein und gibt großflächig Wärme an den Wärmetauscher ab. Der weitere Wärmeaustausch findet über die Innenwand 12 mit der Flüssigkeit statt, die von der unteren Seite, d.h. Abgas-Austrittsseite, in den ringförmigen Flüssigkeitszulaufkanal 31 zwischen Innenwand 12 und Flüssigkeitsrohr 30 als Flüssigkeits-Rücklauf eintrifft. Die zugeführte Flüssigkeit des Flüssigkeits-Rücklaufs steigt in dem Flüssigkeitszulaufkanal 31 im Gegenstrom zum Abgas hoch und gelangt in das Flüssigkeitsrohr 30, da dieses mit der oberen Stirnseite im Abstand zur Verschlussplatte 26 gehalten und offen ist. Die Flüssigkeit gelangt entsprechend erwärmt in die Innenaufnahme 32 des Flüssigkeitsrohres 30 und fließt nach unten zu dem Flüssigkeits-Vorlauf. Dabei kann auf der Abgas-Austrittsseite durch Nachbearbeitung des Abschnitts 10 nur noch die Innenwand 12 vorstehend freigelegt sein, so dass diese selbst als Anschluss für den Flüssigkeits-Rücklauf verwendet werden kann.

Das Flüssigkeitsrohr 30 selbst bildet auf der Abgas-Austrittsseite den Anschluss für den Flüssigkeits-Vorlauf.

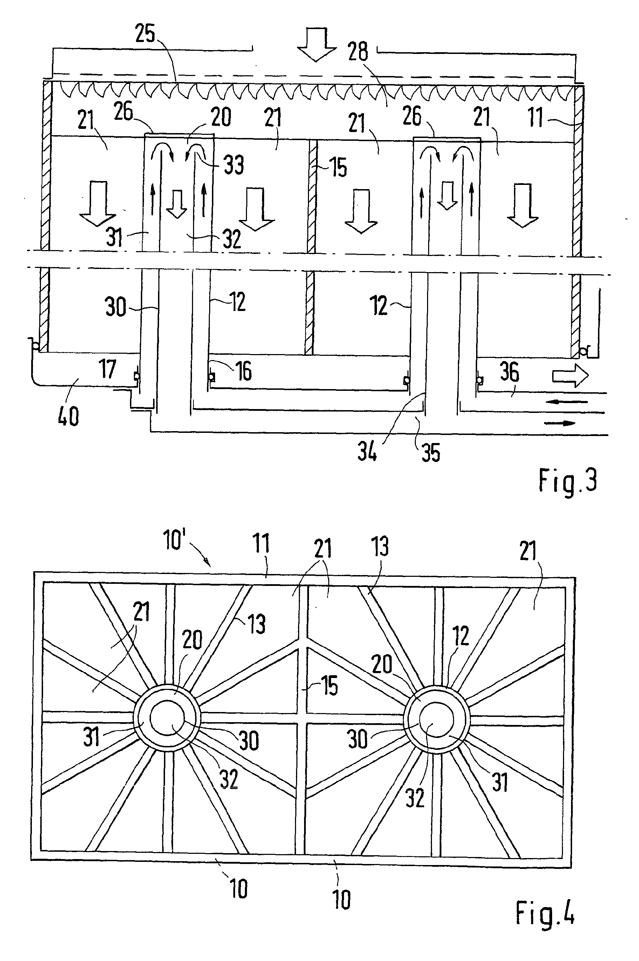

Bei dem Ausführungsbeispiel nach den Fig. 3 und 4 besteht der Abschnitt 10' im Wesentlichen aus zwei quadratischen Basisabschnitten 10, die zu einem einstückigen Gesamtabschnitt 10' aneinandergereiht sind. Die Basisabschnitte 10 weisen je einen Flüssigkeitskanal 20 und eine Vielzahl von Abgaskanälen 21 auf, die den Flüssigkeitskanal 20 jeweils umschließen. Damit diese quadratischen Basisabschnitte 10 aneinander reihbar sind, bildet die Außenwand 11 einen quadratischen Rahmen, der bei der einstückigen Ausführung des Gesamtabschnitts 10' rechteckig wird. Die angrenzenden Seiten der Basisseite 10 bilden eine Trennwand 15. Die Stege 13, die die Abgaskanäle 21 abteilen, verlaufen in den Basisabschnitten 10 jeweils radial zu den Rahmenwänden 11 bzw. zur Trennwand 15, wie die Fig. 4 deutlich zeigt.

Der Brenner 25 erstreckt sich über die gesamte obere Stirnseite des Gesamtabschnitts 10', wobei die verlängerte rahmenartige Außenwand 11 wieder eine Brennkammer 28 umschließen kann. In jeden flüssigkeitsdicht verschlossenen Flüssigkeitskanal 20 ist ein Flüssigkeitsrohr 30 eingesetzt, die an der oberen Abgas-Eintrittsseite wieder im Abstand von den Verschlussplatten 26 enden. Die oberen Stirnseiten der Flüssigkeitsrohre 30 sind offen und enden im Abstand zur zugeordneten Verschlussplatte 26, so dass die Flüssigkeitsübergänge von den ringförmigen Flüssigkeitskanälen 31 in die Innenräume 32 der Flüssigkeitsrohre 30 möglich ist.

An der unteren Abgas-Austrittsseite des Gesamtabschnitts 10' sind die Flüssigkeitskanäle 20, d.h. die Innenwände 12 teilweise freigelegt und können als Anschluss für den gemeinsamen Flüssigkeits-Rücklauf 36 verwendet werden, während die ringförmigen Flüssigkeitszulaufkanäle 31 mit dem Flüssigkeits-Vorlauf 35 in Verbindung stehen. Dabei sind die Innenwände 12 und die Flüssigkeitsrohre 30 durch eine Abgassammelwanne 40 geführt, die den Gesamtabschnitt 10' an der Abgas-Austrittsseite abschließt und mit einem nicht näher gezeigten und erläuterten Abgassystem in Verbindung steht. Dabei sind die vorstehenden Enden 16 der Innenwände 12 zu der Abgassammelwanne 40 hin mittels Dichtungselementen 17 gasdicht abgedichtet.

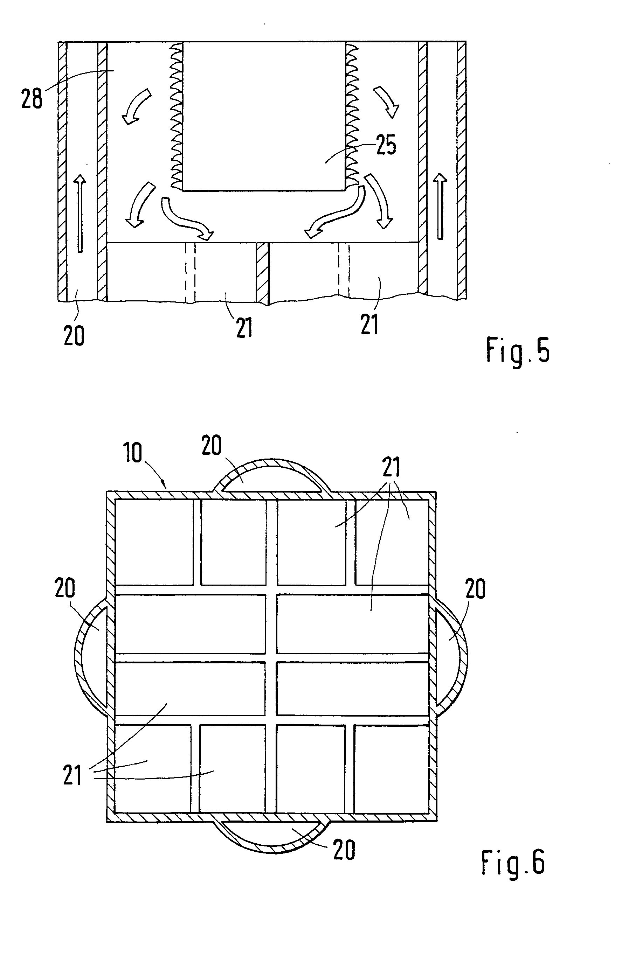

Wie am Ausführungsbeispiel der Fig. 5 und 6 gezeigt ist, kann der Abschnitt 10 des Strangpressprofiles den oder die Abgaskanäle 21 auch im Zentrum aufweisen, wobei an die Außenwände Flüssigkeitskanäle 20 angeformt sind. Dabei können die Abgaskanäle 21 Kammern abteilen, um den Wärmeübergang zu verbessern. Die Abgas-Eintrittsseite ist als Brennkammer 28 ausgespart, um den Brenner 25 aufnehmen zu können.

Wie die Pfeile in Fig. 5 andeuten, ist die Strömungsrichtung der Flüssigkeit vorzugsweise im Gegenstrom zur Richtung des Abgases ausgerichtet.

Wie die verschiedenen Ausführungsbeispiele zeigen, gibt es zahlreiche Ausgestaltungen und Anordnungen der Kanäle im Abschnitt eines symmetrischen oder unsymmetrischen Strangpressprofiles. Es ist nur darauf zu achten, dass alle Kanäle mit gleichbleibendem Querschnitt axial verlaufen.

## Patentansprüche

1. Wärmetauscher für ein Gasheizgerät, insbesondere ein Brennwertgerät, der Abgaskanäle und Flüssigkeitskanäle aufweist, bei dem die vom Gasheizgerät abgegebenen Abgase die Abgaskanäle durchströmen und dabei Wärme an die die Flüssigkeitskanäle durchfließende Flüssigkeit abgeben,
**dadurch gekennzeichnet,**
**dass** er als Abschnitt (10) eines Strangpressprofiles ausgebildet ist, das mindestens einen axial verlaufenden Flüssigkeitskanal (20) und mindestens einen axial verlaufenden Abgaskanal (21) aufweist.

2. Wärmetauscher nach Anspruch 1,
**dadurch gekennzeichnet,**
**dass** die Flüssigkeitskanäle (20) auf der Abgas-Eintrittsseite flüssigkeitsdicht verschlossen sind.

3. Wärmetauscher nach Anspruch 1 oder 2,
**dadurch gekennzeichnet,**
**dass** auf der Abgas-Eintrittsseite durch Bearbeitung des Abschnittes (10) eine Brennkammer (28) zur Aufnahme eines Brenners (25) ausgebildet oder eine Brennkammer auf den Abschnitt (10) des Strangpressprofiles aufgesetzt ist.

4. Wärmetauscher nach einem der Ansprüche 1 bis 3,
**dadurch gekennzeichnet,**
**dass** der Abschnitt (10) eine oder mehrere runde Innenwände (12) und eine Außenwand (11) aufweist,
**dass** die Innenwände (12) Flüssigkeitskanäle (20) umschließen und
**dass** zwischen den Innenwänden (12) und der Außenwand (11) Stege (13) eine Vielzahl von Abgaskanäle (21) bilden.

5. Wärmetauscher nach einem der Ansprüche 1 bis 4,
**dadurch gekennzeichnet,**
**dass** der Abschnitt (10) runden Querschnitt aufweist,
**dass** im Zentrum eine runde Innenwand (12) einen Flüssigkeitskanal (20) umschließen und
**dass** radial zur runden Außenwand (11) verlaufende Stege (13) die Abgaskanäle (21) bilden.

6. Wärmetauscher nach Anspruch 5,
**dadurch gekennzeichnet,**
**dass** die Stege (13) über den Umfang des Abschnittes (10) gleichmäßig verteilt sind und im Querschnitt gleich große Abgaskanäle (21) bilden.

7. Wärmetauscher nach einem der Ansprüche 1 bis 5,
**dadurch gekennzeichnet,**
**dass** der Abschnitt (10) quadratischen Querschnitt aufweist,
**dass** im Zentrum eine runde Innenwand (12) einen Flüssigkeitskanal (20) umschließt und
**dass** radial zur rahmenartigen Außenwand (11) verlaufende Stege (13) die Abgaskanäle (21) bilden.

8. Wärmetauscher nach Anspruch 7,
**dadurch gekennzeichnet,**
**dass** mehrere derartige Abschnitte (10) zu einem einstückigen Gesamtabschnitt (10') aneinandergereiht sind, wobei die aufeinanderstoßenden Seiten zu einer gemeinsamen Trennwand (15) zusammengefasst sind.

9. Wärmetauscher nach einem der Ansprüche 1 bis 8,
**dadurch gekennzeichnet,**
**dass** der Abschnitt (10) oder der Gesamtabschnitt (10') auf der Abgas-Eintrittsseite mit der verlängerten Außenwand (11) eine Kammer (28) zur Aufnahme eines Brenners (25) umschließt.

10. Wärmetauscher nach einem der Ansprüche 1 bis 9,
**dadurch gekennzeichnet,**
**dass** der Abschnitt (10) oder der Gesamtabschnitt (10') auf der Abgas-Austrittsseite mit den verlängerten Innenwänden (12) der F!üssigkeitskanäle (20) durch eine Abgassammelwanne (40) geführt sind und Anschlüsse (16) für den Flüssigkeits-Rücklauf (36) bilden und
**dass** die Flüssigkeitsrohre (30) mit ihren Enden aus den Enden (16) der Innenwände (12) ragen und zum Anschluss des Flüssigkeits-Vorlaufes (35) zusammengefasst sind.

11. Wärmetauscher nach einem der Ansprüche 1 bis 10,
**dadurch gekennzeichnet,**
**dass** die Abgase in den Abgaskanälen (21) von oben nach unten strömen und
**dass** die Flüssigkeit des Vorlaufes in den ringförmigen Flüssigkeitszulaufkanälen (31) von unten nach oben und im Flüssigrohr (30) von oben nach unten gerichtet sind.

12. Wärmetauscher nach einem der Ansprüche 1 bis 11,
**dadurch gekennzeichnet,**
**dass** der Abschnitt (10) oder der Gesamtabschnitt (10') aus einem Alumimnium-Strangpressprofil abgelängt ist und
**dass** in die Abgas-Eintrittsseite durch Nachbearbeitung die Kammer (28) für den Brenner (25) eingearbeitet ist, während auf der Abgas-Austrittsseite die Innenwände (12) der Flüssigkeitskanäle (20) freigelegt sind.

13. Wärmetauscher nach Anspruch 12,
**dadurch gekennzeichnet,**
**dass** die Abgas-Austrittsseite mit einer Abgassammlerwanne (40) abgeschlossen ist, die von den Innenwänden (12) der Flüssigkeitskanäle (20) mit den eingesetzten Flüssigkeitsrohren (30) durchquert ist.

14. Wärmetauscher nach Anspruch 12 oder 13,
**dadurch gekennzeichnet,**
**dass** die Flüssigkeitskanäle (20) mit den Innenwänden (12) zur Abgassammelkammer (40) hin abgedichtet sind.

15. Wärmetauscher nach einem der Ansprüche 1 bis 14,
**dadurch gekennzeichnet,**
**dass** die die Innenwände (12) der Flüssigkeitskanäle (20) mit der Außenwand (11) verbindenden Stege (13) mit Rippen (14) versehen sind.

16. Wärmetauscher nach einem der Ansprüche 1 bis 15,
**dadurch gekennzeichnet,**
**dass** in mindestens einem der Abgaskanäle (21) Strömungsschikanen zur Erzeugung von Turbulenzen angeordnet sind.

17. Wärmetauscher nach Anspruch 1,
**dadurch gekennzeichnet,**
**dass** die Abgaskanäle (21) im Zentrum des Abschnittes (10) des Strangpressprofiles angeordnet sind und
**dass** an die Außenwände der Abgaskanäle (21) Flüssigkeitskanäle (20) angeformt sind (Fig. 5).
